(19) Europäisches Patentamt

European Patent Office

Office européen des brevets

(11) Veröffentlichungsnummer: **0 340 246 B1**

# (12) EUROPÄISCHE PATENTSCHRIFT

(45) Veröffentlichungstag der Patentschrift:
28.08.91 Patentblatt 91/35

(21) Anmeldenummer: 88902128.3

(22) Anmeldetag: 02.03.88

(86) Internationale Anmeldenummer:
PCT/EP88/00152

(87) Internationale Veröffentlichungsnummer:
WO 88/07144 22.09.88 Gazette 88/21

(51) Int. Cl.⁵: **F16D 25/063**

---

## (54) DRUCKMITTELBETÄTIGTE REIBSCHEIBENKUPPLUNG ODER -BREMSE.

(30) Priorität: 11.03.87 DE 3707765

(43) Veröffentlichungstag der Anmeldung:
08.11.89 Patentblatt 89/45

(45) Bekanntmachung des Hinweises auf die
Patenterteilung:
28.08.91 Patentblatt 91/35

(84) Benannte Vertragsstaaten:
DE GB IT

(56) Entgegenhaltungen:
DE-C- 3 441 815
FR-A- 1 575 044
FR-E- 80 586
US-A- 326 608

(73) Patentinhaber: ZAHNRADFABRIK
FRIEDRICHSHAFEN AKTIENGESELLSCHAFT
Löwentaler Strasse 100 Postfach 2520
W-7990 Friedrichshafen 1 (DE)

(72) Erfinder: WOLF, Andreas
Kapellenweg 3
W-7992 Tettnang-Kau (DE)
Erfinder: BREISCH, Harald
Brühlstrasse 10
W-7993 Kressbronn (DE)

(74) Vertreter: Raue, Reimund
Zahnradfabrik Friedrichshafen AG Löwentaler
Strasse 100 Postfach 2520
W-7990 Friedrichshafen 1 (DE)

EP 0 340 246 B1

## Beschreibung

Die Erfindung betrifft eine druckmittelbetätigte Reibscheibenkupplung oder- bremse nach dem Oberbegriff von Anspruch 1.

Aus der DE-C-2540191 ist eine druckmittelbetätigte Reibscheibenkupplung bekannt, in der zwischen dieser und der Betätigungseinrichtung eine Tellerfeder angeordnet ist. Diese wird mit einer Begrenzungsschraube zwischen der Druckplatte der Reibscheibenkupplung und einer Kulissenscheibe vorgespannt. In der gerasteten Schließstellung der Reibscheibenkupplung, in der kein Druckmittel mehr wirkt, erfolgt die kraftschlüssige Kupplung der Reibscheiben in Abhängigkeit von der Auslegung der Tellerfeder.

Aus der DE-C-3441815 ist eine druckmittelbetätigte Reibscheibenkupplung bekannt, in der zwischen der Druckplatte der Reibscheibenkupplung, einer axial feststehenden Welle und einem Kolben der Betätigungseinrichtung eine im Querschnitt konisch geformte Tellerfeder mit drei Anlagen, die in radialer Richtung versetzt sind, angeordnet ist. Die wirksame Federkennlinie beim Schließen der Reibscheibenkupplung wird durch die besondere Form der Tellerfeder im Querschnitt, durch die Anordnung von mehreren im Durchmesser gleichen oder auch nur im Innen- oder Außendurchmesser gleichen Tellerfedern oder durch Tellerfedern erzielt, die eine Vielzahl von quadratisch oder schlitzförmigen Aussparungen aufweisen, die sowohl am Innen- wie auch am Außendurchmesser der Tellerfeder(n) angeordnet sein können.

Diese Tellerfedern mögen zwar die Stoßwirkung beim Einrücken der Reibscheibenkupplung mindern helfen und auch eine Anpassung beim Schließvorgang im gewünschten Sinne ermöglichen und diesen auch gegenüber der Lösung der DE-C-2540191 beschleunigen.

Solche besonders geformten und gestalteten Federn sind aber teuer und haben gegenüber Normfedern häufig eine wesentlich geringere Lebensdauer. Auch können evtl. nötige hohe Kräfte nicht übertragen werden.

Aus der US-A 3266608 ist eine Reibscheibenkupplung bekannt, bei der die Anlagefläche an der Druckplatte besonders ausgebildet ist.

Die Gestaltung dieser Anlagefläche dient aber ausschließlich dem Ziel eine Anlage der Tellerfeder an dem Ring 92 in der geöffneten Stellung der Kupplung zu gewährleisten und eine Umlenkung der Bewegungsrichtung der Tellerfeder während des Schließvorganges zu ermöglichen. Damit soll der Teilabfluß des Druckmittels, der zu einem weichen Anlegen der Kupplung vorgesehen ist, über die Tellerfeder und die Platte 116 verschlossen werden. Das weiche Anlegen der Kupplung und die Veränderung der Kraftkennlinie der Tellerfeder wird nicht über die Anlageflächen derselben erzielt.

Es ist deshalb Aufgabe der Erfindung, eine druckmittelbetätigte Reibscheibenkupplung nach dem Oberbegriff von Anspruch 1 weiterzuentwickeln mit dem Ziel, die Funktionssicherheit zu verbessern, die Kosten für die zum Einsatz kommenden Tellerfedern zu reduzieren und möglichst hohe Kräfte bei kleinem Bauraum über die Tellerfeder zu übertragen.

Diese Aufgabe wird mit den kennzeichnenden Merkmalen von Anspruch 1 erfüllt.

Während nach dem Stand der Technik sowohl nach der DE-C-2540191 wie auch der DE-C-3441815 besonders angefertigte Tellerfedern nötig sind, können nach dem Anmeldegegenstand häufig einfache Normfedern verwendet und, je nach Federkennlinie, ausgewählt werden. Diese Normfedern werden in großen Stückzahlen und damit billig gefertigt und sind auch in bezug auf Standzeit optimiert. Da nach der Erfindung während des Schließvorganges der Reibscheibenkupplung der wirksame Hebelarm zwischen den Anlegepunkten der Tellerfeder sich verringert, ist es möglich, relativ dünne Federn zu benutzen, die in der Anfangsphase des Schließvorganges besonders weich sind und damit Stöße sehr gut verhindern und in der Folge durch die Hebelarmverkürzung während der Schließphase genügend hart sind, um hohe Kräfte zu übertragen, ohne ihre Elastizität völlig zu verlieren.

Ausgehend von der reinen Tellerfederkennlinie kann die Kraftkennlinie, die sich beim Schließen der Reibscheibenkupplung ergibt, nur durch eine unterschiedliche Geometrie an der Anlagefläche des Kolbens oder auch der Endscheibe erzielt werden. Beide Lösungen lassen sich aber sehr kostengünstig und einfach verwirklichen. Sind verschiedene Radien zu einer gekrümmten Anlagefläche zusammengesetzt, verkürzt sich der wirksame Hebelarm zwischen den Anlegepunkten der Tellerfeder, weil sich z. B. der Anlegepunkt am Kolben auf den Radien abrollt. Die Kraftkennlinie steigt dadurch nicht mehr linear, sondern in Abhängigkeit von der Hebelarmverkürzung an. Das Schließen der Reibscheibenkupplung beginnt damit sehr weich, während in der geschlossenen Stellung der Reibscheibenkupplung über die Tellerfeder hohe Kräfte zum Schließen der Kupplung übertragen werden können, wobei eine Restelastizität über die Tellerfeder weiterhin gewährleistet sein kann.

Weitere Einzelheiten der Erfindung werden anhand von Zeichnungen und Ausführungsbeispielen erläutert. Es zeigen :

Fig. 1    eine Reibscheibenkupplung im Halbschnitt,

Fig. 2     das Profil einer Anlagefläche der Tellerfeder am Kolben,

Fig. 3     ein weiteres Profil nach Fig. 2,

Fig. 4     eine Kraftkennlinie nach der Anlagefläche aus, Fig. 2,

Fig. 5     eine Kraftkennlinie nach der Anlagefläche aus Fig. 3.

Fig. 6     eine Überbrückungskupplung in einem Drehmomentwandler.

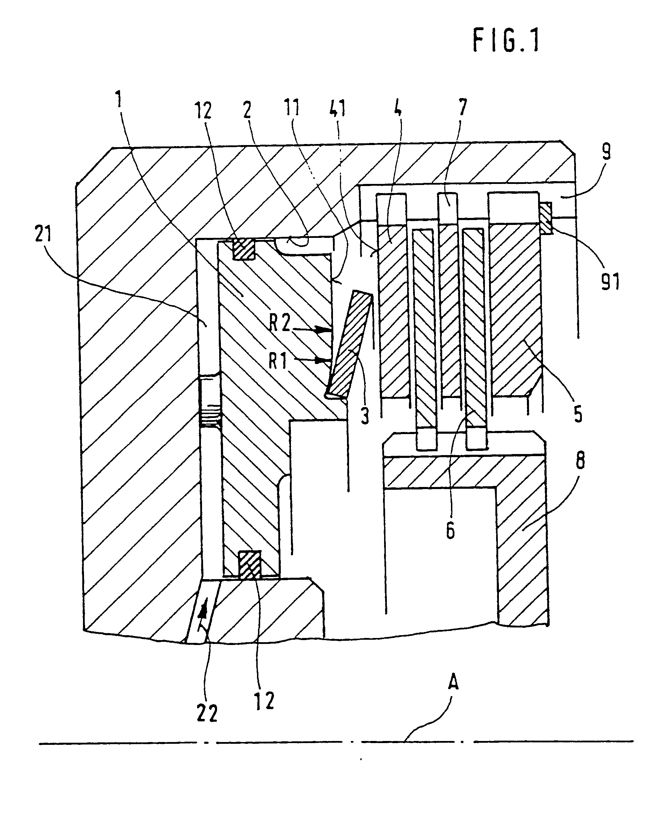

In Fig. 1 ist im Halbschnitt eine aus Innenlamellen 6, Außenlamellen 7, Druckplatte 4, Endscheibe 5 und den Innelamellen- 8 und Außenlamellenträger 9 bestehende Reibscheibenkupplung schematisch dargestellt. Die Druckplatte 4 und die Endscheiben 5 sind ebenfalls drehfest im Außenlamellenträger 9 gelagert. Betätigt wird die Reibscheibenkupplung über eine Kolben-/Zylinder-Betätigungsvorrichtung 1, 2, wobei der Druckraum 21 über die im Kolben 1 angeordneten Dichtungen 12 abgeschlossen wird. Zwischen dem Kolben 1 und der Druckplatte 4 ist noch eine Tellerfeder 3 angeordnet, die Innen- und Außenlamellen 6, 7 und die Druckplatte 4 sind im Innenlamellenträger 8 und Außenlamellenträger 9 axial verschiebbar, jedoch drehfest angeordnet, während die Endscheibe 5 am Außenlamellenträger, zumindest in eine Richtung, über einen Nutring 91 auch axial festgehalten wird.

Die Anlagefläche 11 des Kolbens 1 hat eine vom rechten Winkel zur Drehachse A abweichende Kontur R1, R2, die aus in radialer Richtung aneinandergereihten bestimmten geometrischen Konturen zusammengesetzt ist und ergibt somit eine in radialer Richtung gekrümmte Anlagefläche.

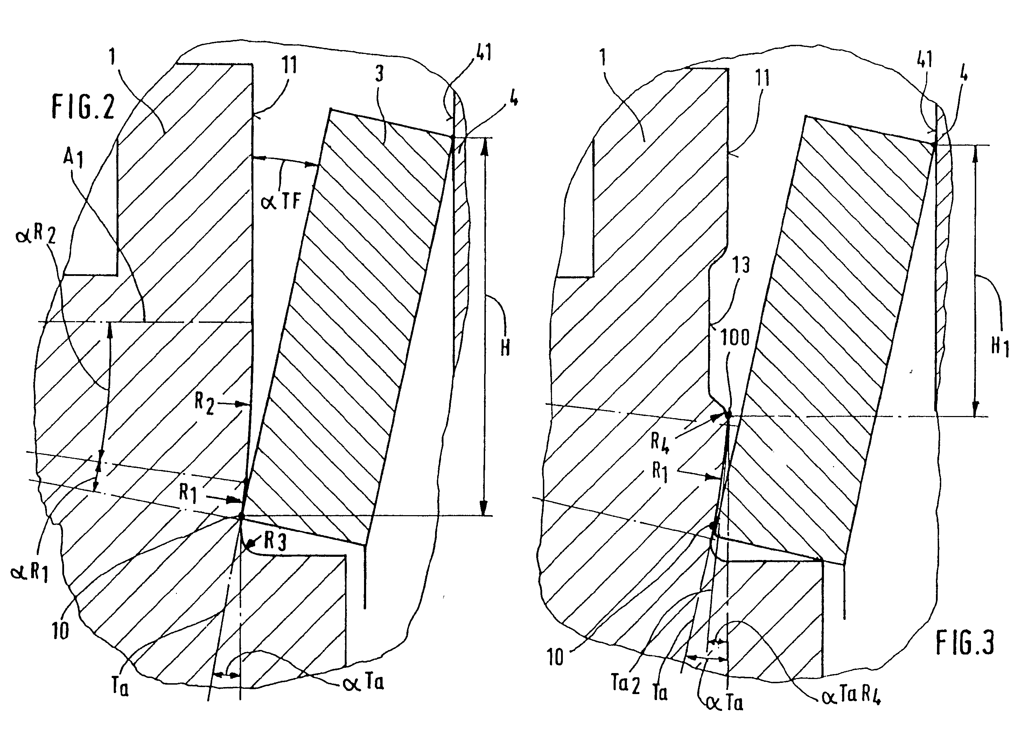

Die Fig. 2 zeigt ein erstes Beispiel einer Anlagefläche 11 an dem Kolben 1 für die Tellerfeder 3, die radial innen am Kolben 1 und radial außen an der Druckplatte 4 anliegt. Im Bereich der radial inneren Anlagefläche 11 weicht diese vom rechten Winkel zur Achsrichtung A1 ab und wird durch zwei in radialer Richtung aneinandergereihte Radien R1, R2 definiert. Die Kontur der Anlagefläche 11 setzt sich deshalb aus einem kleinen, radial innenliegenden Radius R1, einem anschließend angeordneten größeren Radius R2 und einer im rechten Winkel zur Achsrichtung A1 angeordneten Geraden n zusammen. Der kleinere Radius führt über z. B. einen Winkel von 3° und der große Radius über einen Winkel von 6°, so daß die Tangente Ta des kleinen Radius R1 in einem Winkel von Ta = 9° von der Geraden der Anlagefläche 11 abweicht. Dieser Winkel muß kleiner sein als der Anstellwinkel TF, der sich zwischen der Tellerfeder 3 und der im rechten Winkel zur Achsrichtung A1 erstreckenden Geraden der Anlagefläche 11 im entspannten Zustand ergibt.

Die Fig. 3 entspricht der Fig. 2, nur die Kontur im Bereich der radial inneren Anlagefläche hat neben dem bereits beschriebenen radial innenliegenden kleinen Radius R1 einen sehr kleinen Radius R4, z. B. mit 0,5 mm, so daß sich praktisch ein Absatz 13 ergibt. Die gemeinsame Tangente Ta2 der Radien R1 und R4 muß dabei noch einen Winkel TaR4 zur Senkrechten auf der Achse A haben.

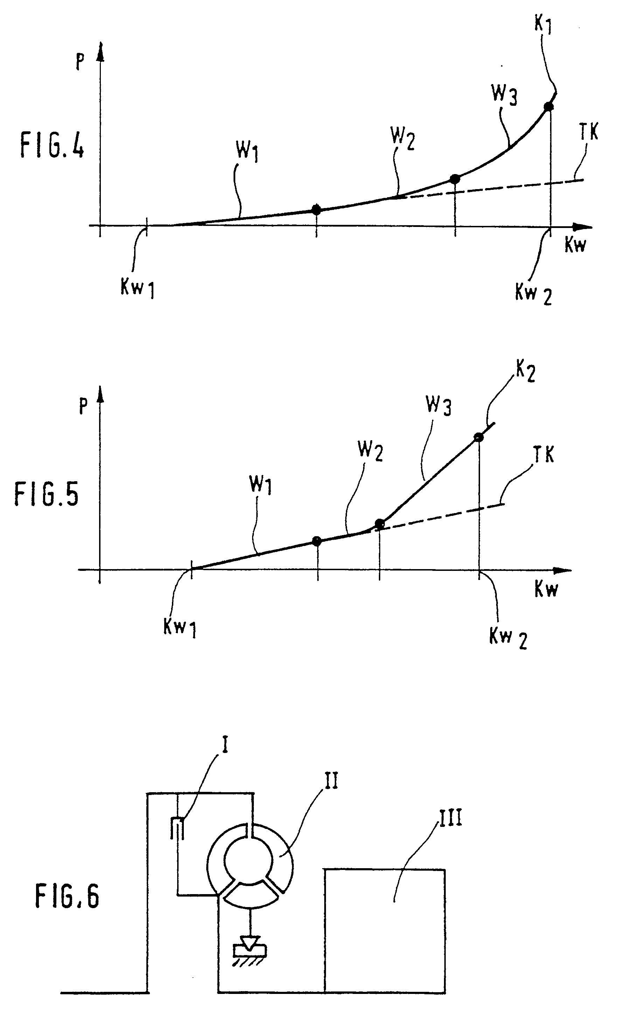

Die Fig. 4 zeigt die Kraftkennlinie, die sich aus der Kontur der Anlagefläche 11 am Kolben 1 nach der Fig. 2 ergibt und die Fig. 5 zeigt die Kraftkennlinie K2, die sich aus der Anlagefläche 11 nach Fig. 3 darstellt. Mit TK sind die Tellerfederkennlinien bezeichnet, die sich, je nach Dimensionierung, aus der jeweilig eingesetzten Tellerfeder 3 selbst ermitteln. In der Senkrechten ist die Kraft P und in der Waagerechten der Kolbenweg Kw aufgetragen, wobei mit Kw1 der Punkt bezeichnet ist, in dem der Kolben 1 die Tellerfeder 3, die Druckplatte 4 und alle Innen- 6 und Außenlamellen 7 aneinander und an der Endscheibe 5 anliegen. Die Kraftkennlinie K1 im Wegabschnitt W1 ergibt sich aus dem Winkelunterschied zwischen dem Winkel der Tangente Ta vom Radius R1 und dem Anstellwinkel TF von der Tellerfeder 3 im Anlegepunkt 10. Diese Gerade fortgesetzt, ergibt die Tellerfederkennlinie TK, die wirken würde, wenn die Anlagefläche, z. B. am Kolben, im rechten Winkel zur Achse A der Reibscheibenkupplung ausgeführt wäre und keine definiert geformte, in radialer Richtung verlaufende Kontur aufweisen und der Anlegepunkt 10 im Prinzip unverändert an dieser Stelle bleiben würde. Die dem Wegabschnitt W2 zugeordnete Kraftkennlinie K1 entsteht durch die Hebelarmänderung, die sich infolge des Abrollens der Tellerfeder 3 mit dem Anlegepunkt 10 auf dem kleinen Radius R1 der Kontur des Kolbens 1 ergibt, wenn der Kolben 1 sich weiter in Schließrichtung bewegt. Infolge des relativ kleinen Radius R1 ist die Hebelarmveränderung und damit der Kraftanstieg klein bei einem relativ langen Weg. Der steilere Anstieg der Kraftkennlinie K1 im Wegabschnitt W3 resultiert aus dem Abrollen der Tellerfeder 3 mit dem Anlegepunkt 10 auf dem größeren Radius R2 der Kontur vom Kolben 1. Die Tangenten der Radien R1 und R2 sind im Übergangspunkt dieser beiden Radien identisch, so daß sich zwischen dem Wegabschnitt W2 und W3 kein besatz in der Kraftkennlinie K1 ergibt. Der große Radius R2 bewirkt bei kleinem axialen Weg des Kolbens eine starke Verkürzung des Hebelarmes und damit einen relativ steileren Kraftanstieg. Im Punkt Kw2 ist die Kupplung völlig geschlossen und überträgt das volle Moment, wobei die Tellerfeder in etwa auf ein Viertel ihrer axialen Durchbiegung zusammengedrückt ist. Durch die freie Auswahl einer Normtellerfeder und durch eine bewußte Gestaltung von mindestens einer Anlagefläche, z. B. der Anlagefläche 11 des Kolbens 1 durch Aneinanderreihung von definierten Konturen in radialer Richtung, ist es möglich, jede gewünschte Kraftkennlinie, z. B. K1, zu erhalten, so daß alle gewollten Bedingungen beim Schließen der Kupplung erzielbar sind.

In dem zweiten Ausführungsbeispiel nach den Fig. 3 und 5 ist der Ablauf in den ersten beiden markierten Wegabschnitten W1 und W2 wie bereits beschrieben. Der kleine Radius R1 ist jedoch größer gewählt worden — R1 nach Fig. 2 und 4 etwa 20 mm, R1 nach Fig. 3 und 5 etwa 36,5 mm—. Dadurch ist der Anstieg der Kraftkennlinie K2 im Wegabschnitt W2 der Fig. 5 größer. Wie die Fig. 3 zeigt, ist an den Radius R1 ein sehr kleiner Radius R4 angefügt, so daß der Anlegepunkt 10 in der Schließstellung 100 nicht mehr weiter abrollt. Im Wegabschnitt 3 der Fig. 5 ist deshalb die Kraftkennlinie K2 eine Gerade, die relativ steil ansteigt, wobei dieser bestieg abhängig ist vom wirksamen Hebelarm H1, der für den Restweg annähernd konstant bleibt. Die druckmittelbetätigte Reibscheibenkupplung, die selbstverständlich auch eine Reibscheibenbremse sein kann, wirkt wie folgt : Über die Druckmittelzuführleitung 22 wird Druckmittel in den Druckraum 21 geleitet, so daß der Kolben 1 über die Tellerfeder 3 und die Druckplatte 4 die Innen- und Außenlamellen 7, 8 anlegt, wobei diese sich an der Endscheibe 5 abstützen. Damit ist der Anlegepunkt Kw1 nach den Fig. 4 und 5 erreicht. Ab diesem Punkt Kw1 wirkt die Geometrie, die sich aus dem Winkelverhältnis— Anstellwinkel TF der Tellerfeder 3 und dem Winkel Ta der Tangente Ta— von der Anlagefläche 11 und der Tellerfeder 3 ergibt. Eine zunehmende Hebelarmverkürzung ergibt eine zunehmende Steilheit der Federkennlinie und eine progressiv zunehmende Pressung (Moment) im Lamellenpaket. Die Kraftkennlinie K1, K2 vom Wegabschnitt W1 entspricht in etwa der Federkennlinie TK von her ausgewählten Tellerfeder 3. Je nach der Kontur der Anlagefläche, z. B. R1 + R2 nach Fig. 2 und 4 oder R1 + R4 nach Fig. 3 und 5, wird die Reibscheibenkupplung kraftschlüssig zur Übertragung des Momentes geschlossen. Die Kupplung ist damit einfach nur durch die Auswahl einer einfachen Tellerfeder — Normfeder — und durch eine geeignete Kontur an der Anlagefläche, z. B. 11, an alle Lastzustände leicht anpaßbar. Durch das Entlüften des Druckraumes 21 wird die Reibscheibenkupplung geöffnet, wobei in vielen Anwendungsfällen infolge der angeordneten Tellerfeder 3 zwischen dem Kolben 1 und der Druckplatte 4 keine allgemein bekannte Öffnungsfeder — nicht dargestellt — nötig ist. Besonders gut geeignet ist die dargestellte Lösung für die Anwendung als Überbrückungskupplung I in einem hydrodynamischen Drehmomentwandler (II), der einem Getriebe III vorgeschaltet ist (Fig. 6).

Die Erfindung ist nicht allein auf die in den Beispielen dargestellten Lösungen beschränkt, sondern die Anlagefläche kann auch an der Druckplatte 4 im gleichen Sinne angeordnet werden oder beide Anlageflächen, also am Kolben und an der Druckplatte, können im Sinne der Erfindung gestaltet sein. Die Ausgestaltung der Erfindung an einer Reibscheibenbremse wird nicht dargestellt, weil sich dadurch im Zusammenhang mit der Anlagefläche am Kolben bzw. an der Druckplatte die gleichen Bedingungen ergeben, wie bei der bereits beschriebenen Reibscheibenkupplung, nur die Kolben-/Zylinder-Betätigungseinrichtung und der Außenlamellenträger sind in oder an feststehenden Bauteilen, z. B. in oder an einem Getriebegehäuse, angeordnet.

Bezugszeichen

| | |
|---|---|
| 1 | Kolben |
| 11 | Anlagefläche |
| 12 | Dichtungen |
| 13 | Absatz |
| 2 | Zylinder |
| 21 | Druckraum |
| 22 | Druckmittelzuleitung |
| 3 | Tellerfeder |
| 4 | Druckplatte |
| 41 | Anlagefläche |
| 5 | Endscheibe |
| 6 | Innenlamellen |
| 7 | Außenlamellen |
| 8 | Innenlamellenträger |
| 9 | Außenlamellenträger |
| 91 | Nutring |
| 10, 100 | Anlegepunkt |
| | |
| A | Achse |
| A1 | Achsrichtung |
| P | Kraft |
| R1 | kleiner Radius (Kontur) |
| R2 | großer Radius (Kontur) |
| R3 | Radius |
| R4 | sehr kleiner Radius (Kontur) |

| | |
|---|---|
| Ta, Ta2 | Tangente |
| K1 | Kraftkennlinie |
| K2 | Kraftkennlinie |
| TK | Tellerfederkennlinie |
| I | Uberbrückungskupplung |
| II | Drehmomentwandler |
| III | Getriebe |
| Kw | Kolbenweg |
| Kw1 | Anlegepunkt |
| Kw2 | geschlossene Kupplung |
| W1 | Wegabschnitt |
| W2 | Wegabschnitt |
| W3 | Wegabschnitt |
| Ta | Winkel an Tangente |
| TF | Anstellwinkel an Tellerfeder |
| TaR4 | Winkel an Tangente |
| H, H1 | Hebelarm |

## Patentansprüche

1. Druckmittelbetätigte Reibscheibenkupplung oder -bremse mit einer Kolben-Zylinder-Betätigungsvorrichtung (1,2), wobei zwischen dem Kolben (1) und einer diesem zugewandten Druckplatte (4) eine an einer Fläche (11) des Kolbens (1) und einer Fläche (41) der Druckplatte (4) anliegende Tellerfeder (3) zur Beeinflußung der Kraftkennlinie (K1, K2) beim Schließen der Reibscheibenkupplung (4, 5, 6, 7) angeordnet ist, dadurch **gekennzeichnet**, daß die Tellerfeder (3) eine gerade Mantellinie hat, entlang derer sie im Verlauf des hydraulischen Einkuppelvorganges an einer unterschiedlich gekrümmten Kontur (R1, R2, R3, 13) der Fläche (41) der Druckplatte (4) und/oder der Fläche (11) des Kolbens (1) zur Anlage kommt, wodurch der Hebelarm (H, H1) an der Tellerfeder (3) kleiner und diese somit schwerer zusammendrückbar wird.

2. Druckmittelbetätigte Reibscheibenkupplung oder -bremse nach Anspruch 1, dadurch **gekennzeichnet**, daß die Anlageflächen (11, 41) durch aneinander gereihte Radien (R1, R2) definiert sind.

3. Druckmittelbetätigte Reibscheibenkupplung oder -bremse nach Anspruch 2, dadurch **gekennzeichnet**, daß die wirksame Kraftkennlinie (K1, K2) für den Kolbenweg (Kw) zwischen Anlagepunkt (Kw1) und der geschlossenen Kupplung (Kw2)
— durch den Winkelunterschied zwischen der Tangente (Ta) eines ersten Radius (R1) an einem ersten Anlagepunkt (10) der Tellerfeder (3) und dem Anstellwinkel ($\alpha$ TF) derselben,
— durch die Änderung des Hebelarmes (H) an der Tellerfeder (3) die sich durch dis Abrollen über einen ersten, kleineren Radius (R1) und
— durch die Änderung des Hebelarmes (H) an der Tellerfeder (3) die sich durch das Abrollen an einem zweiten, gegenüber dem ersten Radius (R1), gröberen Radius (R2)
bestimmt wird.

4. Druckmittelbetätigte Reibscheibenkupplung oder -bremse nach Anspruch 1, dadurch **gekennzeichnet**, daß die Anlageflächen (11, 41) durch aneinander gereihte Radien (R1, R4) und Absätze (13) deffiniert sind.

5. Druckmittelbetätigte Reibscheibenkupplung oder -bremse nach Anspruch 4, dadurch **gekennzeichnet**, daß die wirksame Kraftlinie (K2) für den Kolbenweg (Kw) zwischen Anlagepunkt (Kw1) und der geschlossenen Kupplung (Kw2)
— durch den Winkelunterschied zwischen der Tangente (Ta) eines ersten Radius (R1) an einem ersten Anlagepunkt (10) der Tellerfeder (3) und dem Anstellwinkel ($\alpha$ TF) derselben,
— durch die Änderung des Hebelarmes (H) an der Tellerfeder (3), die sich durch das Abrollen über einen ersten, kleinen Radius (R1) und
— durch einen annähernd konstanten, kleinen Hebelarm (H), der sich ab einem zweiten Anlagepunkt (100) am Übergang zu einem vierten Radius (R4) ergibt, der wesentlich kleiner als der kleine, erste Radius (R1) ist,
bestimmt wird.

6. Druckmittelbetätigte Reibscheibenkupplung oder -bremse nach Anspruch 1, dadurch **gekennzeichnet**, daß diese als Überbrückungskupplung (I) in einem Drehmomentwandler (II) eines Hydrodynamisch-mechanischen Verbundgetriebes (III) angeordnet ist.

## Claims

1. Pressure medium-actuated friction disc clutch or brake with a piston-cylinder actuating device (1, 2), wherein a cup spring (3) — for modifying the power characteristic line (K1, K2) when the friction disc clutch (4, 5, 6, 7) closes — abutting one face (11) of the piston (1) and one face (41) of a pressure plate (4) is mounted between the piston (1) and the pressure plate (4) facing same, characterised in that the cup spring (3) has a straight outline, along which it comes into contact with a differently curved contour (R1, R2, R3, 13) of the face (41) of the pressure plate (4) and/or the face (11) of the piston (1) during the hydraulic engagement process, whereby the lever arm (H, H1) on the cup spring (3) becomes smaller and the latter thus becomes more difficult to compress.

2. Pressure medium-actuated friction disc clutch or brake according to claim 1, characterised in that the contact faces (11, 41) are defined by radii (R1, R2) arranged in series.

3. Pressure medium-actuated friction disc clutch or brake according to claim 2, characterised in that the effective power characteristic line (K1, K2) for the piston distance (Kw) between the point of contact (Kw1) and the closed clutch (Kw2) is defined
   — by the difference in angle between the tangent (Ta) of a first radius (R1) at a first point of contact (10) of the cup spring (3) and the angle of incidence ($\alpha$ TF) thereof,
   — by the change in the lever arm (H) at the cup spring (3) obtained by rolling down over a first, smaller radius (R1), and
   — by the change in the lever arm (H) obtained by rolling down at a second radius (R2) which is larger than the first radius (R1).

4. Pressure medium-actuated friction disc clutch or brake according to claim 1, characterised in that the contact faces (11, 41) are defined by radii (R1, R4) and steps (13) arranged in series.

5. Pressure medium-actuated friction disc clutch or brake according to claim 4, characterised in that the effective power line (K2) for the piston distance (Kw) between the point of contact (Kw1) and the closed clutch (Kw2) is defined
   — by the difference in angle between the tangent (Ta) of a first radius (R1) at a first point of contact (10) of the cup spring (3) and the angle of incidence (a TF) thereof,
   — by the change in the lever arm (H) at the cup spring (3) obtained by rolling down over a first, small radius (R1), and
   — by an approximately constant, small lever arm (H), which is produced starting from a second point of contact (100) at the join with a fourth radius (R4), which is substantially smaller than the small first radius (R1).

6. Pressure medium-actuated friction disc clutch or brake according to claim 1, characterised in that it is mounted as a bridging clutch (I) in a torque converter (II) of a hydrodynamic-mechanical compound drive (III).

## Revendications

1. Embrayage ou frein à disques de friction actionné par moyen de pression avec dispositif d'actionnement piston-cylindre (1, 2), avec un ressort à disques (3) installé entre le piston (1) et un disque d'appui (4) tourné vers celui-ci et mis en contact avec une surface (11) du piston (1) et une surface (41) du disque d'appui (4) afin d'influer sur la caractéristique de puissance (K1, K2) lors de la fermeture de l'embrayage à disques (4, 5, 6, 7), **caractérisé** en ce que le ressort à disques (3) a une génératrice droite, le long de laquelle il s'applique à un contour à courbure variable (R1, R2, R3, 13) de la surface (41) du disque d'appui (4) et/ou de la surface (11) du piston (1) au cours du procédé d'enclenchement hydraulique, en conséquence de quoi le levier (H, H1) peut être ainsi pressé plus fortement contre le ressort à disques (3), devenant plus petit.

2. Embrayage ou frein à disques de friction actionné par moyen de pression selon la revendication 1 **caractérisé** en ce que les surfaces de contact (11, 41) sont définies par des rayons séquentiels continus (R1, R2).

3. Embrayage ou frein à disques de friction actionné par moyen de pression selon la revendication 2 **caractérisé** en ce que la caractéristique de puissance (K1, K2) effective pour la course du piston (Kw) entre le point de contact (Kw1) et l'embrayage fermé (Kw2) est défini
   — par la différence d'angle entre la tangente (Ta) d'un premier rayon (R1) du premier point de contact (10)

6

du ressort à disques (3) et son angle d'incidence (α TF),

— par la modification du levier (H) sur le ressort à disques (3) qui, par roulement, forme un premier rayon (R1) plus petit, et

— par la modification du levier (H) sur le ressort à disques (3) qui, par roulement, forme un deuxième rayon (R2) plus grand que le premier rayon (R1).

4. Embrayage ou frein à disques de friction actionné par moyen de pression selon la revendication 1 **caractérisé** en ce que les surfaces de contact (11, 41) sont définies par des rayons (R1, R4) et des saillies (13) séquentiels continus.

5. Embrayage ou frein à disques de friction actionné par moyen de pression selon la revendication 4 **caractérisé** en ce que la caractéristique de puissance (K2) effective pour la course du piston (Kw) entre le point de contact (Kw1) et l'embrayage fermé (Kw2) est définie

— par la différence d'angle entre la tangente (Ta) d'un premier rayon (R1) du premier point de contact (10) du ressort à disques (3) et son angle d'incidence (α TF),

— par la modification du levier (H) sur le ressort à disques (3) qui, par roulement, forme un premier rayon plus petit et

— par la modification du levier (H) sur le ressort à disques (3) qui à partir d'un deuxième point de contact (100) forme un quatrième rayon (R4), bien plus petit que le premier petit rayon.

6. Embrayage ou frein à disques de friction actionné par moyen de pression selon la revendication 1 **caractérisé** en ce qu'il est installé en tant qu'embrayage de pontage (I) dans un convertisseur de couple (II) d'une transmission combinée hydrodynamique-mécanique (III).

FIG.1

FIG.2

FIG.3

EP 0 340 246 B1

FIG.4

$K_1$

$W_3$

$W_2$

$W_1$

TK

$P$

$Kw_1$

$Kw_2$

$Kw$

FIG.5

$K_2$

$W_3$

$W_2$

$W_1$

TK

$P$

$Kw_1$

$Kw_2$

$Kw$

FIG.6

I

II

III